# EUROPÄISCHE PATENTSCHRIFT

(11) **EP 3 574 610 B1**
(45) Veröffentlichungstag und Bekanntmachung des Hinweises auf die Patenterteilung: **28.07.2021**
(21) Anmeldenummer: 18705313.7
(22) Anmeldetag: 29.01.2018
(51) Int. Cl.: H04L 9/32, H04L 29/06

(54) **VERFAHREN ZUM DURCHFÜHREN EINER ZWEIFAKTORAUTHENTIFIZIERUNG**
METHOD FOR CARRYING OUT A TWO-FACTOR AUTHENTICATION
PROCÉDÉ DE RÉALISATION D'UNE AUTHENTIFICATION À DEUX FACTEURS

(30) Priorität: 27.01.2017 DE 102017000768
(43) Veröffentlichungstag der Anmeldung: 04.12.2019
(73) Patentinhaber: Giesecke+Devrient Mobile Security GmbH, 81677 München (DE)
(72) Erfinder: STÖHR, Volker, 81827 München (DE); KAMM, Frank-Michael, 83607 Holzkirchen (DE); GERHARDT, Nils, 80333 München (DE)
(86) Internationale Anmeldenummer: PCT/EP2018/000041
(87) Internationale Veröffentlichungsnummer: WO 2018/137889

(56) Entgegenhaltungen:
- WO-A1-2016/044373
- US-A1- 2014 189 360
- US-A1- 2014 351 589

## Beschreibung

### Technisches Gebiet

Die vorliegende Erfindung betrifft ein Verfahren zum Durchführen einer Zweifaktorauthentisierung zwischen einem Client und einer Relying Party.

Bei einem Client handelt es sich beispielsweise um ein Mobiltelefon, einen Tablet-PC, einen Computer (PC) oder dergleichen. Bei einer Relying Party handelt es sich beispielsweise um eine Einrichtung, wie einen Host, einen Server oder dgl., die Zugang zu einem Service, insbesondere einer sicheren Softwareapplikation ermöglicht.

Bei der Zweifaktorauthentifizierung kommt bevorzugt der Industriestandard U2F (Universal Second Factor, universeller zweiter Faktor) zum Einsatz. Die U2F-Spezifikation wird von der FIDO-Allianz (Fast IDentity Online) verwaltet.

### Stand der Technik

Die Zweifaktorauthentifizierung wird in der Regel initiiert indem zur Authentifizierung ein Dienstanbieter (Relying Party) als ersten Faktor nach dem Nutzernamen und ggf. nach dem zugehörigen Passwort fragt, wobei der Nutzernamen den Nutzer identifiziert und das Passwort den Nutzer authentisiert. Der Dienstanbieter prüft diese Daten und leitet, wenn die Daten in Ordnung sind, die Überprüfung des zweiten Faktors (Besitz) in Form von U2F ein.

In einem ersten Schritt schickt der Dienstanbieter (Relying Party) ein Datenpaket an einen Kundenrechner, wie beispielsweise einen Web-Browser. Dieses umfasst eine Challenge, dies sind einige zufällig gewählte Daten, eine Applikationskennung (AppID), und eine Schlüsselkennung (KeyHandle), welche bei der initialen Anmeldung hinterlegt wurde.

Der Kundenrechner prüft die Applikationskennung, ergänzt diese um zusätzliche Daten wie beispielsweise eine Kanalkennung (Channel ID) und leitet diese Daten gehasht an das U2F-Gerät weiter. Bei dem U2F-Gerät kann es sich beispielsweise um einen USB-Dongle mit einem Taster handeln.

Das U2F-Gerät ermittelt mit Hilfe der Schlüsselkennung (KeyHandle) den für diese Sitzung passenden privaten Schlüssel (kpriv), und signiert mit diesem die gehashten Werte der Applikationskennung und der Challenge und bildet so die signierte Retourantwort.

Zusätzlich wird ein Zähler (Counter) in die Antwort integriert, um duplizierte U2F-Geräte erkennen zu können. Der Kundenrechner, wie beispielsweise der Web-Browser, leitet diese Daten an den Dienstanbieter weiter, der mit dem PublicKey die Signatur s und die darin enthaltenen Daten prüft und, falls diese in Ordnung sind, den Zugang gewährt.

Herausforderung bei FIDO-U2F ist, dass es dafür ausgelegt ist an einem PC oder dergleichen eingesetzt zu werden, an dem auch ein USB-Dongle als zweiter Faktor in eine USB-Schnittstelle eingesetzt werden kann. Es ist zwar möglich den zweiten Faktor über NFC oder Bluetooth vorzuweisen, jedoch werden in diesem Fall spezielle Authentikatoren gefordert, die in der Regel eigens und ausschließlich für die Verwendung für FIDO beschafft werden müssen.

Es besteht jedoch der Wunsch eine Zweifaktorauthentifizierung, die konform ist mit FIDO-U2F, auch an weiteren elektronischen Einrichtungen, wie beispielsweise einem Mobiltelefon vornehmen zu können. Insofern ist es weiterhin ein Wusch als zweiten Faktor einen beim Nutzer bereits vorhandenen Datenträger mit einer Kontaktlosschnittstelle, wie beispielsweise eine Kreditkarte, in Verbindung mit einem Mobiltelefon einsetzen zu können, um eine Zweifaktorauthentifizierung gemäß FIDO-U2F durchzuführen. FIDO-U2F fordert für die Signierung die Verwendung von elliptischen Kurven. Diese Funktion weisen Kreditkarten bzw. Paymentkarten im Allgemeinen nicht auf. Alternativ ist die Nutzung von RSA zur Signierung gemäß FIDO-UAF zugelassen. Dabei fordert FIDO zusätzlich zur RSA-Signierung auch die Erzeugung von RSA-Schlüsselpaaren. Diese Erzeugung von RSA-Schlüsseln würde auf der Karte zu viel Rechenzeit in Anspruch nehmen, so dass die Ausführungszeit für den Nutzer nicht akzeptable wäre, und ist auf derzeitigen Kreditkarten nicht implementiert.

Alternativ könnte der neue Personalausweis der BRD (nPA) als zweiter Faktor eingesetzt werden und per Funkverbindung mit dem Mobiltelefon gekoppelt werden. Allerdings ist derzeit die eID-Funktionalität erst bei 30-35% der sich im Feld befindenden Ausweise freigeschaltet. Weiterhin erfordert die eID-Funktionalität bei jeder Nutzung die zusätzliche Eingabe eines sechsstelligen Passworts, welches eingegeben werden muss, während der nPA an die NFC-Schnittstelle des Mobiltelefons gehalten wird.

Die Veröffentlichungen WO 2016/044373 A1 und US 2014/189360 A1 stellen relevanten Stand der Technik dar.

### Darstellung der Erfindung

Der Erfindung liegt die Aufgabe zugrunde, ein Verfahren zum Durchführen einer Zweifaktorauthentifizierung zwischen einem Client und einer Relying Party zur Verfügung zu stellen, das die bekannten Probleme aus dem Stand der Technik löst und das es ermöglicht, für die U2F-Authentisierung ein Device zu verwenden das der Nutzer bereits besitzt. Das Verfahren soll so ausgebildet sein, dass auch Einrichtungen, die nicht speziell für FIDO-Anwendungen konzipiert wurden, als zweiter Faktor genutzt werden können, ohne dass die Zustimmung des Herausgebers (Issuer) des zweiten Faktors notwendig ist und/ oder ohne dass die Relying Party einen Unterschied zum standardisierten FIDO-Verfahren erkennen kann.

Diese Aufgabe wird mit einem Verfahren gemäß dem unabhängigen Anspruch 1 gelöst. Bevorzugte Ausgestaltungen des Verfahrens finden sich in den Unteransprüchen.

Die Erfindung basiert auf dem Grundgedanken einen Datenträger, insbesondere eine EMV-Karte, als zweiten Formfaktor (U2F) einzusetzen, wobei der Datenträger über einen Client, bspw. ein Mobiltelefon, mit einem Tokenserver in Verbindung steht. Der Tokenserver kann - ohne das Erfordernis eine Nutzerdatenbank vorhalten zu müssen - alsdann weitere Dienste, wie beispielsweise eine ressourcenintensive Schlüsselableitung, übernehmen.

Demgemäß betrifft die Erfindung ein Verfahren zum Durchführen einer Zweifaktorauthentifizierung zwischen einem Client und einer Relying Party, umfassend die folgenden Schritte: Durchführen einer Authentisierung zwischen dem Client und der Relying Party, Übermitteln von Authentisierungszusatzdaten von der Relying Party an den Client; Anfordern einer Server-Challenge (EMV-Challenge) durch den Client von einem Tokenserver; Übermitteln der Server-Challenge von dem Tokenserver an den Client; Durchführen eines Datenaustauschs zwischen dem Client und einem Datenträger, wobei der Client von dem Datenträger Datenträgerauthentisierungsdaten erhält, wobei die Datenträgerauthentisierungsdaten zumindest teilweise unter Verwendung von Daten aus der Server-Challenge berechnet werden, Übermitteln von Authentisierungsdaten von dem Client an den Tokenserver, wobei die Authentisierungsdaten Daten aus dem Datenaustausch zwischen Client und Datenträger, insbesondere die Datenträgerauthentisierungsdaten, sowie die Authentisierungszusatzdaten umfassen; Überprüfen der Authentisierungsdaten durch den Tokenserver; Erzeugen einer Authentisierungsantwort in dem Tokenserver; Übermitteln der Authentisierungsantwort von dem Tokenserver an den Client; und Übermitteln der Authentisierungsantwort von dem Client an die Relying Party und Überprüfen der Authentisierungsantwort durch die Relying Party.

Mit dem erfindungsgemäßen Verfahren ist es besonders vorteilhaft möglich eine Zweifaktorauthentifizierung unter Verwendung des Datenträgers des Benutzers durchzuführen, wobei der Datenträger nicht speziell an die Verwendung in dem Zweifaktorauthentifizierungsverfahren angepasst werden muss. Ferner ist es nicht notwendig eine PIN-Verifikation gegenüber dem Datenträger, insbesondere dem EMV-Datenträger durchzuführen. Weiterhin kann in dem Verfahren mit Vorteil ein einfacher Tokenserver eingesetzt werden, der ohne eine Nutzerdatenbank, in der Daten zu jedem Nutzer gespeichert sind, auskommt. Folglich können Kosten sowohl bei der Auswahl des Datenträgers als auch bei der Auswahl des Tokenservers eingespart werden. Insbesondere der Aspekt der einfachen Auswahl des in dem Verfahren einzusetzenden Datenträgers senkt die Einstiegshürde für den Nutzer, da dieser einfach einen seiner bereits vorhandenen Datenträger in dem Verfahren einsetzen kann. Entgegen der üblichen Bezeichnung kann die Relying Party auch als Bestätigungsinstanz gegenüber einer Diensteinrichtung, wie beispielsweise einem Web-shop, einem Emaildienst, etc., eingesetzt werden. Die Relying Party wirkt dann als Authentisierungsservice, auch bezeichnet als Authentication-as-a-service (AaaS), wobei der Authentisierungsservice die (Zweifaktor-)Authentisierung für die Diensteinrichtung übernimmt.

Gemäß der Erfindung handelt es sich bei dem Client um eine Einrichtung wie ein Mobiltelefon, ein Tablet-PC, einen PC oder dergleichen. Bei der Relying Party handelt es sich um eine Einrichtung, wie einen Host, einen Server oder dgl., die Zugang zu einem Service, insbesondere einer sicheren Softwareapplikation ermöglicht. Ein Beispiel einer Relying Party ist ein Webdienst, zu dem der Nutzer Zugang erlangen möchte, insbesondere ein Web-Shop, ein Bankingzugang, eine Emailapplikation oder dgl. Bei der Authentisierung zwischen dem Client und der Relying Party werden beispielsweise ein Nutzername und ein Kennwort abgefragt.

Bei den Datenträgerauthentisierungsdaten handelt es sich beispielsweise um Zertifikate, die der Client von dem Datenträger erhält, bspw. ein Issuer-Zertifikat (Aussteller) und/oder ein datenträgerspezifisches Zertifikat, sowie um Daten die durch einen Datenaustausch zwischen Client und Datenträger unter Ausnutzung von Daten aus der Server-Challenge ermittelt werden. Somit kann sichergestellt werden, dass die Datenträgerauthentisierungsdaten auch die Inhalte der Server-Challenge berücksichtigen. Die Datenträgerauthentisierungsdaten können zusätzliche Daten umfassen.

Die Authentisierungsdaten, die von dem Client an den Tokenserver übermittelt werden, umfassen mit Vorteil sowohl Daten aus dem Datenaustausch zwischen dem Client und dem Datenträger, also auch die Datenträgerauthentisierungsdaten, sowie Authentisierungszusatzdaten aus der Authentisierung zwischen dem Client und der Relying Party. Dadurch wird sichergestellt, dass der Datenträger beim Empfang der Server-Challenge tatsächlich bei dem Datenaustausch zwischen dem Client und dem Datenträger anwesend war. Ein mehrmaliges Einbringen der Datenträgerauthentisierungsdaten in die Authentisierungsdaten fällt unmittelbar auf, da die Datenträgerauthentisierungsdaten stets in Abhängigkeit von der Server-Challenge berechnet werden, wobei die Server-Challenge bei jedem Aufruf geändert wird. Somit ist es mit Vorteil möglich Replay-Angriffe zu verhindern, da der Tokenserver sich die zufällig erzeugte Server-Challenge merkt und diese für die Überprüfung der Datenträgerdaten verwendet.

Gemäß einer Ausführungsform werden beim Durchführen der Authentisierung zwischen dem Client und der Relying Party ein KeyHandle, insbesondere ein vor unbefugtem Zugriff geschützter UserPrivateKey, insbesondere ein verschlüsselter UserPrivateKey, eine Challenge, insbesondere eine FIDO-Challenge, und/ oder eine AppID, insbesondere eine FIDO-AppID, übergeben. Auf Basis dieser Daten ist es mit Vorteil möglich die Authentisierungsantwort zu berechnen. Dadurch wird sichergestellt, dass die Authentisierungsantwort für jede Zweifaktorauthentifizierung individuell berechnet wird.

Ferner kann die Erfindung das Prüfen der AppID sowie die Prüfung umfassen, mit welcher Einrichtung ein zweiter Faktor bei der Authentisierung nachzuweisen ist. Somit wird dem Client mit Vorteil mitgeteilt, dass beispielsweise ein Datenträger als zweiter Faktor (U2F) verwendet werden kann. Auf diese Weise wird das Verfahren für den Nutzer vereinfacht.

Gemäß einer besonders bevorzugten Ausführungsform ist zur Durchführung des Verfahrens, insbesondere zur Durchführung des Datenaustauschs, keine PIN-Eingabe gegenüber dem Datenträger erforderlich. Stattdessen kann sich der Datenträger (U2F) gegenüber dem Tokenserver authentisieren und der Tokenserver kann sich gegenüber der Relying Party bevorzugt mittels kryptografischer Methoden authentisieren. Die PIN-Verifikation des Datenträgers gegenüber dem Tokenserver ist nicht erforderlich, kann jedoch optional vorgesehen werden. Wird ein Ausweisdokument, insbesondere der deutsche Personalausweis (nPA) als der Datenträger verwendet, so ist stets eine PIN-Verifikation gegenüber dem Datenträger und auch gegenüber der RelyingParty notwendig, also eine doppelte PIN-Verifikation, die gegebenenfalls als störend empfunden werden kann. Bei EMV-Karten ist die PIN-Verifikation nicht zwingend erforderlich.

Gemäß einer weiteren besonders bevorzugten Ausführungsform der Erfindung weist die Server-Challenge unter anderem eine Zufallszahl auf. Die Zufallszahl kann beispielsweise als eine 4 Byte lange Zahl ausgebildet sein. Durch Senden der Zufallszahl an den Client ist es später möglich die Zufallszahl in die Datenträgerauthentisierungsdaten mit einzurechnen, beispielsweise in der Form einer Signatur. Dadurch kann der Tokenserver mit Vorteil nachprüfen, ob dem Client tatsächlich der Datenträger "vorgezeigt". wurde.

Weiterhin kann gemäß einer bevorzugten Ausführungsform zum Durchführen des Datenaustauschs zwischen dem Client und dem Datenträger eine kontaktlose und/ oder eine kontaktbehaftete Verbindung zwischen dem Client und dem Datenträger hergestellt werden. Folglich ist es möglich den Datenträger über eine Luftschnittstelle mit dem Client zu verbinden. Dazu kann bevorzugt eine NFC-Verbindung zwischen Datenträger und Client hergestellt werden, indem der Datenträger beispielsweise an eine NFC-Schnittstelle des Clients (Mobiltelefons/Tablet-PCs) gehalten wird. Alternativ kann der Datenträger kontaktbehaftet in einen Kartenleser des Clients (PC) eingeführt werden.

Gemäß einem weiteren Aspekt der Erfindung kann die Überprüfung der Authentisierungsdaten durch den Tokenserver den Nachweis erbringen, dass der Datenträger bei dem Datenaustausch zwischen dem Client und dem Datenträger physisch vorhanden war. Die Authentisierungsdaten werden unter Berücksichtigung der Datenträgerauthentisierungsdaten berechnet. In die Datenträgerauthentisierungsdaten gehen die Daten aus der Server-Challenge mit ein. Folglich kann die Überprüfung der Authentisierungsdaten mit Vorteil den Nachweis erbringen, dass der Datenträger, also der zweite Faktor (U2F), während dem Datenaustausch zwischen dem Client und dem Datenträger physisch vorhanden war. Dadurch ist ein wesentliches Erfordernis bei der Zweifaktorauthentifizierung erfüllt.

Gemäß einer weiteren Ausführungsform kann bei der Überprüfung der Authentisierungsdaten durch den Tokenserver, der Tokenserver bei erfolgreicher Überprüfung aus den Authentisierungsdaten einen Clientschlüssel entschlüsseln, wobei der Clientschlüssel bei der Erzeugung der Authentisierungsantwort verwendet wird. In den Clientschlüssel gehen mit Vorteil ein Tokenservermasterschlüssel, der sicher in dem Tokenserver gespeichert ist, sowie Daten, die ausschließlich von dem Datenträger, der Relying Party und dem Client stammen, ein. Bei dem Clientschlüssel handelt es sich mit Vorteil um einen sog. ENC/MAC Wrapping Key und/ oder den KeyHandle, in den der verschlüsselte FIDO PrivKey eingeht. Somit kann der Tokenserver mit Vorteil kostengünstig bereitgestellt werden, da in dem Tokenserver keine Nutzerdaten gespeichert werden müssen. Lediglich der Tokenservermasterschlüssel muss sicher in dem Tokenserver verwahrt werden, bevorzugt in einem HSM (Hardware Security Module).

Gemäß der Erfindung ist ein Client vorgesehen, der zur Verwendung in einem Verfahren gemäß den obigen Ausführungen geeignet ist, wobei es sich bei dem Client um ein mobiles Endgerät, einen Tablet-PC und/ oder einen PC handelt. Gemäß diesen Ausgestaltungen ist es besonders vorteilhaft möglich ein erfindungsgemäßes Verfahren auszuführen.

Weiterhin kann das erfindungsgemäße Verfahren besonders vorteilhaft mit einem System ausgeführt werden, das zur Verwendung in einem Verfahren gemäß den obigen Ausführungen eingerichtet ist.

Gemäß einer weiteren Ausführungsform erfolgt die Authentisierung des Nutzers nicht direkt zwischen dem Tokenserver und der Relying Party sondern über einen dazwischen geschalteten Authentisierungsdienst ("Identity Federation Service"). In diesem Fall fordert die Relying Party über ein industrieübliches Federation-Protokoll (z.B. OpenID Connect oder SAML) die Nutzerauthentisierung bei dem Authentisierungsdienst an. Der Authentisierungsdienst wird dann vom Nutzer mit Hilfe des Clients, des Tokenservers und des Datenträgers eine Authentisierung anfordern. Der Authentisierungsvorgang läuft wie oben beschrieben ab, jedoch gegenüber dem Authentisierungsdienst und nicht gegenüber der Relying Party. Nach erfolgreicher Authentisierung attestiert der Authentisierungsdient gegenüber der Relying Party die Authentisierung, ggf. ergänzt um weitere Identitätsdaten oder nutzerspezifische Attestierungen, die der Authentisierungsdienst aufgrund seiner gespeicherten Nutzerdaten durchführen kann.

Zusammenfassend ist es mit dem erfindungsgemäßen Verfahren möglich nahezu jeden Datenträger als zweiten Faktor zu verwenden, insbesondere können EMV-Karten als zweiter Faktor für FIDO-U2F verwendet werden. Die Datenträger müssen nicht über die für FIDO erforderlichen kryptographischen Fähigkeiten verfügen. Daher entfällt für viele Personen die Notwendigkeit, ein gesondertes "2. Device" zu beschaffen und vorzuhalten. Weiterhin ist die Zustimmung der Herausgeber der Datenträger (Card Issuer) zur Ausführung des Verfahrens nicht notwendig. Somit kann das Verfahren ohne wesentlichen Aufwand implementiert werden.

Der erforderliche Tokenserver benötigt keine Datenbank, in der Nutzerdaten/Clientdaten gespeichert werden. Folglich ist der Tokenserver einfach und kostengünstig. Lediglich ein HSM zur Aufbewahrung des Tokenservermasterschlüssels ist vorteilhaft.

Das erfindungsgemäße Verfahren ist durch Verwendung der Server-Challenge bei der Berechnung der Datenträgerauthentisierungsdaten sicher gegen Trojaner auf dem Client.

Ein weiterer Vorteil des Verfahrens ist, dass der Datenträger nur kurz während der Durchführung des Datenaustausch zwischen dem Client und dem Datenträger in die Nähe des Client gehalten werden muss. Dadurch wird die Wahrscheinlichkeit von unabsichtlich unterbrochenen Authentisierungen gering gehalten.

### Kurze Beschreibung der Zeichnungen

- Fig. 1: zeigt schematisch den Ablauf einer erfindungsgemäßen Zweifaktorauthentifizierung;
- Fig. 2: zeigt den Ablauf einer erfindungsgemäßen Zweifaktorauthentifizierung in einer detaillierteren Darstellung; und
- Fig. 3: zeigt ein Flussdiagramm, das eine erfindungsgemäße Zweifaktorauthentifizierung darstellt.

### Detaillierte Beschreibung von Ausführungsformen der Erfindung

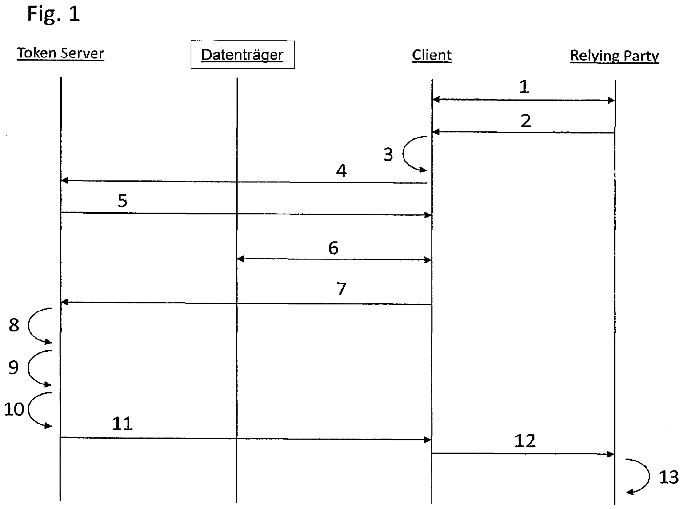

Im Folgenden werden beispielhafte Ausführungsformen der Erfindung im Detail unter Bezugnahme auf die Fig. 1-3 beschrieben. Veränderungen in Bezug auf das beschriebene Verfahren sind innerhalb des durch die Ansprüche festgelegten Schutzumfangs möglich.

Fig. 1 zeigt schematisch den Ablauf einer erfindungsgemäßen Zweifaktorauthentifizierung zwischen einem Client und einer Relying Party. Bei einem Client handelt es sich beispielsweise um ein Mobiltelefon, einen Tablet-PC, einen Computer (PC) oder dergleichen. Bei einer Relying Party handelt es sich beispielsweise um eine Einrichtung, wie einen Host, einen Server oder dgl., die Zugang zu einem Service, insbesondere einer sicheren Softwareapplikation ermöglicht.

Bei der Zweifaktorauthentifizierung kommt bevorzugt der Industriestandard U2F (Universal Second Factor, universeller zweiter Faktor) zum Einsatz. Die U2F-Spezifikation wird von der FIDO-Allianz verwaltet.

Bei der erfindungsgemäßen Zweifaktorauthentifizierung wird zunächst (Schritt 1) eine Authentisierung zwischen dem Client und der Relying Party durchgeführt. Diese kann beispielsweise durch die Eingabe von Nutzername und Kennwort in einem Web-Browser durchgeführt werden.

Im nächsten Schritt 2 werden Authentisierungszusatzdaten von der Relying Party an den Client übermittelt. Bei den Authentisierungszusatzdaten kann es sich beispielsweise um einen (FIDO-)KeyHandle, eine FIDO-Challenge und eine (FIDO-)AppID handeln. Diese Begriffe sind aus dem FIDO-Standard ausreichend bekannt, weshalb auf eine Beschreibung abgesehen von der im Folgenden kurzen Beschreibung der Begriffe verzichtet wird.

Der KeyHandle identifiziert und weist den privaten Schlüssel (UserPrivateKey) für die nachfolgende Authentisierung des Benutzers gegenüber der Relying Party in verschlüsselter Form auf. Bei der Challenge handelt es sich um eine normale Challenge für eine kryptographische Operation, bspw. eine Zufallszahl. Die AppID identifiziert den (Web-)Dienst, bei dem sich der Benutzer authentisieren möchte.

In einem darauffolgenden, fakultativen Schritt 3 kann die AppID überprüft werden. Weiterhin kann in dem Schritt 3 geprüft werden, auf welche Art der zweite Faktor (U2F) nachgewiesen werden kann. Im vorliegenden Fall wird angenommen, dass ein Datenträger als zweiter Faktor zulässig ist.

In einem Folgeschritt 4 fordert der Client von einem Tokenserver eine Server-Challenge an. Diese Server-Challenge kann, wenn es sich bei dem zu verwendenden Datenträger um eine EMV-Karte handelt, auch als EMV-Challenge bezeichnet werden. Die Server-Challenge umfasst eine Zufallszahl (Unpredictable Number), die der Tokenserver bereitstellt. Die Zufallszahl ist bspw. zumindest 4 Byte lang. Die Server-Challenge wird in einem späteren Schritt 6 (s.u.) von dem Datenträger geprüft, insbesondere signiert. Durch die Signatur kann der Tokenserver überprüfen, ob dem Client tatsächlich der Datenträger präsentiert wurde. Da in der Server-Challenge die Zufallszahl enthalten ist, wird die Möglichkeit eines Replay-Angriffs durch einen Angreifer erschwert. In Schritt 4 können Authentisierungszusatzdaten von dem Client an den Tokenserver im Rahmen der Anforderung der Server-Challenge übermittelt werden. Alternativ können diese Authentisierungszusatzdaten im Schritt 7 übermittelt werden (siehe unten). Es ist unerheblich, ob die Authentisierungszusatzdaten im Schritt 4 und/ oder 7 an den Tokenserver übermittelt werden.

Anschließend wird die Server-Challenge von dem Tokenserver an den Client in einem weiteren Schritt 5 übermittelt.

Daraufhin wird ein Datenaustauschzwischen dem Client und dem Datenträger durchgeführt (Schritt 6). Im Zuge des Datenaustauschs wird der Datenträger in Verbindung mit dem Client gebracht, bspw. kontaktlos oder kontaktbehaftet. Es werden Daten zwischen dem Datenträger und dem Client ausgetauscht. Beispielsweise kann der Client zumindest ein Zertifikat von dem Datenträger erhalten, insbesondere ein IssuerPKCert und ein CardPKCert.

Weiterhin sendet der Client im Schritt 6 die Server-Challenge an den Datenträger, wobei der Datenträger Datenträgerauthentisierungsdaten berechnet und die Server-Challenge in die Berechnung der Datenträgerauthentisierungsdaten mit eingeht. Da die Server-Challenge in die Berechnung der Datenträgerauthentisierungsdaten mit eingeht, geht auch die Zufallszahl aus der Server-Challenge mit in die Berechnung ein. Gemäß der Erfindung nimmt der Client die Datenträgerauthentisierungsdaten von dem Datenträger nur entgegen ohne sie zu prüfen, da gemäß der Erfindung die Prüfung im Tokenserver (Schritte 8-10) zu einem späteren Zeitpunkt erfolgt. Zum späteren Zeitpunkt der Prüfung im Tokenserver ist es nicht mehr notwendig den Datenträger mit dem Client zu verbinden.

In einem nachfolgenden Schritt 7 werden Authentisierungsdaten von dem Client an den Tokenserver übermittelt, wobei die Authentisierungsdaten Daten aus dem Datenaustausch zwischen Client und Datenträger, insbesondere die Datenträgerauthentisierungsdaten, sowie die Authentisierungszusatzdaten umfassen. Daten, die aus dem Austausch mit dem Datenträger stammen, können bspw. das IssuerPKCert, das CardPKCert, und die Datenträgerauthentisierungsdaten umfassen. Daten die aus dem Austausch mit der Relying Party stammen, können den KeyHandle, einen Hash der AppID, sowie einen Hash der Clientdaten umfassen, wobei die Clientdaten die ursprüngliche (FIDO-) Challenge aufweisen.

Die an den Tokenserver übermittelten Authentisierungsdaten werden in einem nächsten Schritt 8 durch den Tokenserver überprüft. Der Tokenserver kann bei der Prüfung das IssuerPKCert mit Hilfe eines vorliegenden "Payment Scheme Public Key", das CardPKCert mit Hilfe des nun geprüften "Issuer Public Key" und die Datenträgerauthentisierungsdaten mit Hilfe des nun geprüften "Card Public Key" prüfen.

Sind alle Prüfungen erfolgreich, ist sichergestellt, dass die Datenträgerauthentisierungsdaten von einem echten Datenträger, bspw. einer EMV-Karte, stammen bzw. signiert wurden, d.h. der entsprechende Datenträger wurde tatsächlich vorgewiesen. Der Token Server kann sich bei Verwendung einer EMV-Karte bspw. davon überzeugen, dass die Daten Primary Account Number, PAN Sequence Number (fakultativ) und Expiry Date, welche eine EMV-Karte eindeutig identifizieren, von der verwendeten EMV-Karte stammen. Der Tokenserver führt in diesem Zusammenhang Schritte aus, die bei einer bekannten EMV-Transaktion das Terminal durchführen würde.

Im Fall einer erfolgreichen Überprüfung, entschlüsselt der Tokenserver in einem nächsten, fakultativen Schritt 9 aus den Authentisierungsdaten einen Clientschlüssel. Dazu kann der Tokenserver bspw. den User Private Key (auch bezeichnet als Clientschlüssel) entschlüsseln, der (zusammen mit ggf. anderen Daten) im vorliegenden Key Handle (s.o.) enthalten ist. Der zur Entschlüsselung von KeyHandle bevorzugt erforderliche (symmetrische) Schlüssel "KWrap" kann aus folgenden Daten abgeleitet werden: Master Key (Hauptschlüssel) des Token Server, Personal Account Number (PAN), (optional) PAN-Sequence Number, (optional) ExpiryDate, (optional) weitere Daten. Gemäß einer Alternative kann der Schlüssel "KWrap" beispielsweise das Ergebnis der Verschlüsselung oder Entschlüsselung eines Hashwerts über die Kartendaten (PAN, PAN Sequence Number, Expiry Date, etc.) sein.

Sämtliche benutzerbezogenen Daten, die zur Schlüsselableitung verwendet werden, stammen von dem Client, dem Datenträger, bzw. der Relying Party. Eine Benutzerdatenbank muss in dem Tokenserver nicht vorgehalten werden. Dadurch ist es möglich den Tokenserver einfach zu konfigurieren und im Ergebnis kostengünstiger zu konfigurieren. Lediglich der gemäß einer bevorzugten Ausführungsform zu verwendende Master Key des Tokenserver muss, um die Sicherheit des Verfahrens zu gewährleisten, sicher verwahrt werden. Dafür bietet sich ein HSM (Hardware Security Module) an.

Im Anschluss wird in einem nächsten Schritt 10 eine Authentisierungsantwort in dem Tokenserver erzeugt. Die Authentisierungsantwort dient zur Bestätigung der Echtheit des zweiten Faktors (U2F), im vorliegenden Fall des Datenträgers. In dem vorliegenden Ausführungsbeispiel kann mit Hilfe des User Private Key die (FIDO-) Authentication Response Message erzeugt werden, wobei es sich um eine Signatur mit Hilfe des User Private Key über einen Hash(AppID), einen Hash(Client data), wobei mit diesem Hash indirekt auch die ursprüngliche FIDO-Challenge der Relying Party signiert wird, einen Counter (Application Transaction Counter der EMV-Karte), etc. handelt.

Danach wird die Authentisierungsantwort ggf. in Verbindung mit weiteren Daten in einem Folgeschritt 11 an den Client gesendet und von dort in einem weiteren Schritt 12 an die Relying Party gesendet. Alternativ kann die Authentisierungsantwort auch direkt an die Relying Party gesendet werden.

Die Relying Party prüft alsdann (Schritt 13) die Authentisierungsantwort; im vorgenannten Ausführungsbeispiel prüft die Relying Party die (Signatur der) (FIDO-) Authentication-Response. Dazu verwendet die Relying Party den User Public Key (Clientschlüssel). Diese Überprüfung kann gemäß dem FIDO-Standard erfolgen und wird daher nicht näher erläutert.

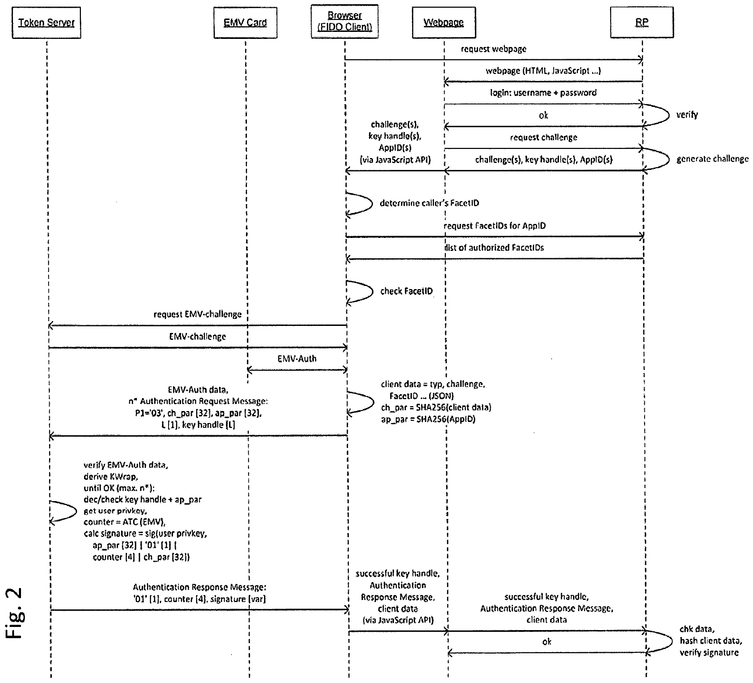

Fig. 2 zeigt den Ablauf einer erfindungsgemäßen Authentifizierung bei Verwendung einer EMV-Karte als den Datenträger. Bei einer EMV-Karte handelt es sich in der Regel um eine Zahlungskarte, die gemäß der EMV-Spezifikation (Europay International, MasterCard und VISA) ausgebildet ist. EMV-Karten sind derzeit so spezifiziert, dass sie keine elliptischen Kurven, die bei asymmetrischen Kryptosystemen zur Anwendung kommen und die bei einer FIDO-U2F-Authentifizierung gefordert werden, berechnen können.

Entsprechend eignet sich das erfindungsgemäße Verfahren unter anderem bei Verwendung einer EMV-Karte (Datenträger) als zweiten Faktor (U2F), da die EMV-Karte im Zusammenwirken mit einem Tokenserver die gemäß FIDO geforderte Berechnung auslagern kann.

Fig. 2 zeigt in diesem Zusammenhang den beispielhaften Ablauf einer erfindungsgemäßen Zweifaktorauthentifizierung, bei der ein Benutzer versucht, sich in einem Browser (FIDO-Client) auf einer Webseite einer Relying Party einzuloggen. Die in Fig. 2 gezeigten Schritte entsprechen im Wesentlichen den in Fig. 1 bereits erläuterten Schritten, weshalb auf eine nochmalige detaillierte Beschreibung verzichtet wird.

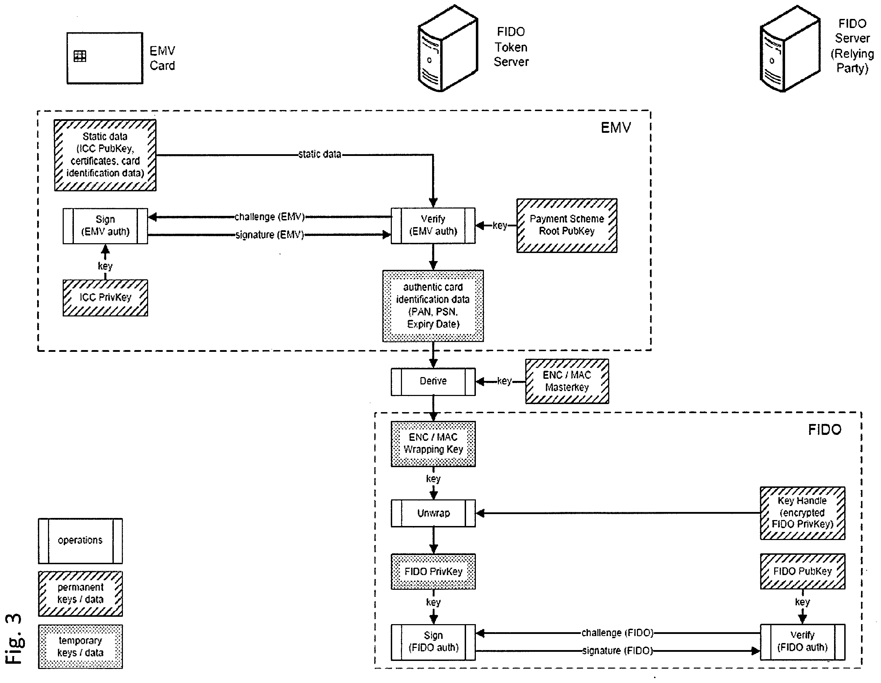

Fig. 3 zeigt ein Flussdiagramm, das die erfindungsgemäße Zweifaktorauthentifizierung darstellt, wobei in Analogie zu Fig. 2 ebenfalls eine EMV-Karte als Datenträger eingesetzt wird. Die Abläufe in Fig. 3 entsprechen im Wesentlichen den in Fig. 1 und 2 gezeigten Abläufen, weshalb auf eine erneute Beschreibung verzichtet wird.

Ein weiteres Ausführungsbeispiel ist, dass ein Mobiltelefon, z.B. ein Smartphone, eine Funktionalität aufweist, die auch eine EMV-Karte hat, wie sie oben beschrieben ist. Diese Funktion kann beispielsweis in einem Secure Element (SE), z.B. der SIM-Karte, in einer Trusted Execution Environment (TEE), d.h. eine gesicherte Laufzeitumgebung für eine Anwendung, oder in einer Host Card Emulation (HCE), d.h. eine Technologie zur Virtualisierung von Chipkarten in NFC-basierten mobilen Bezahlverfahren, des Mobiltelefons ausgeführt werden. Somit weist das Mobiltelefon eine virtuelle Kartenfunktion auf.

Der Fachmann erkennt aus der obigen Beschreibung, dass vielfältige Veränderungen an dem erfindungsgemäßen Verfahren im Rahmen des Schutzumfangs der Ansprüche möglich sind.

## Patentansprüche

1. Verfahren zum Durchführen einer Zweifaktorauthentifizierung zwischen einem Client und einer Relying Party, umfassend die folgenden Schritte:
- Durchführen (1) einer Authentisierung zwischen dem Client und der Relying Party;
- Übermitteln (2) von Authentisierungszusatzdaten von der Relying Party an den Client;
- Anfordern (4) einer Server-Challenge durch den Client von einem Tokenserver;
- Übermitteln (5) der Server-Challenge von dem Tokenserver an den Client;
- Durchführen (6) eines Datenaustauschs zwischen dem Client und einem Datenträger, wobei der Client von dem Datenträger Datenträgerauthentisierungsdaten erhält, wobei die Datenträgerauthentisierungsdaten zumindest teilweise unter Verwendung von Daten aus der Server- Challenge berechnet werden,
- Übermitteln (7) von Authentisierungsdaten von dem Client an den Tokenserver, wobei die Authentisierungsdaten Daten aus dem Datenaustausch zwischen Client und Datenträger, die Datenträgerauthentisierungsdaten, sowie die Authentisierungszusatzdaten umfassen;
- Überprüfen (8) der Authentisierungsdaten durch den Tokenserver, wodurch der Nachweis erbracht wird, dass der Datenträger bei dem Datenaustausch zwischen dem Client und dem Datenträger physisch vorhanden war; - Erzeugen (10) einer Authentisierungsantwort in dem Tokenserver;
- Übermitteln (11) der Authentisierungsantwort von dem Tokenserver an den Client; und
- Übermitteln (12) der Authentisierungsantwort von dem Client an die Relying Party und Überprüfen (13) der Authentisierungsantwort durch die Relying Party.

2. Verfahren nach Anspruch 1, **dadurch gekennzeichnet, dass** beim Durchführen der Authentisierung zwischen dem Client und der Relying Party ein KeyHandle, insbesondere ein UserPrivateKey, eine Challenge und/ oder eine AppID übergeben werden.

3. Verfahren nach Anspruch 1 oder 2, **dadurch gekennzeichnet, dass** zur Durchführung des Verfahrens keine PIN-Eingabe gegenüber dem Datenträger erforderlich ist.

4. Verfahren nach einem der vorhergehenden Ansprüche, **dadurch gekennzeichnet, dass** die Server-Challenge eine Zufallszahl aufweist.

5. Verfahren nach einem der vorhergehenden Ansprüche, **dadurch gekennzeichnet, dass** zum Durchführen des Datenaustauschs zwischen dem Client und dem Datenträger eine kontaktlose und/ oder eine kontaktbehaftete Verbindung zwischen dem Client und dem Datenträger hergestellt wird.

6. Verfahren nach einem der vorhergehenden Ansprüche, **dadurch gekennzeichnet, dass** bei der Überprüfung der Authentisierungsdaten durch den Tokenserver der Tokenserver aus den Authentisierungsdaten, insbesondere den Authentisierungszusatzdaten, einen Clientschlüssel entschlüsselt (10), wobei der Clientschlüssel bei der Erzeugung der Authentisierungsantwort verwendet wird.

7. Verfahren nach einem der vorhergehenden Ansprüche, **dadurch gekennzeichnet, dass** in dem Tokenserver keine Nutzerdaten gespeichert sind.

8. Verfahren nach einem der vorhergehenden Ansprüche, **dadurch gekennzeichnet, dass** der Tokenserver die Authentisierungsantwort mit Hilfe von Nutzerdaten erzeugt, welche ausschließlich von dem Client, dem Datenträger und/ oder der Relying Party stammen.

9. Verfahren nach einem der vorhergehenden Ansprüche, **dadurch gekennzeichnet, dass** zum Datenaustausch zwischen dem Client und dem Datenträger keine PIN- Verifikation notwendig ist.

10. Verfahren nach einem der vorhergehenden Ansprüche, ferner umfassend den Schritt des Überprüfens, ob mit dem Datenträger als dem zweiten Faktor eine Zweifaktorauthentifizierung zulässig ist.

11. Verwendung eines mobilen Endgeräts, eines Tablet-PC oder eines PC als Client in einem Verfahren zur Zweifaktorauthentifizierung nach einem der vorhergehenden Ansprüche, wobei der Client eingerichtet ist, die Schritte des Clients im Verfahren auszuführen.

12. Tokenserver, eingerichtet zur Verwendung in einem Verfahren zur Zweifaktorauthentisierung nach einem der vorhergehenden Ansprüche 1-10, wobei der Tokenserver eingerichtet ist, die Schritte des Tokenservers im Verfahren auszuführen.

13. System umfassend einen Tokenserver nach Anspruch 12 und eingerichtet, ein Verfahren zur Zweifaktorauthentifizierung nach einem der vorhergehenden Ansprüche 1-10 auszuführen.

14. System nach Anspruch 13 umfassend einen Datenträger in Form einer EMV-Karte, die eingerichtet ist, einem Client über eine kontaktlose und/ oder eine kontaktbehaftete Verbindung Datenträgerauthentisierungsdaten bereitzustellten, die zumindest teilweise unter Verwendung von Daten aus einer Server-Challenge berechnet werden.

## Claims

1. A method for carrying out a two-factor authentication between a client and a relying party, comprising the following steps of:
- carrying out (1) an authentication between the client and the relying party;
- transmitting (2) of additional authentication data from the relying party to the client;
- requesting (4) a server challenge by the client from a token server;
- transmitting (5) the server challenge from the token server to the client;
- carrying out (6) a data exchange between the client and a data carrier, wherein the client receives data-carrier authentication data from the data carrier, wherein the data-carrier authentication data are computed at least in part while employing data from the server challenge,
- transmitting (7) of authentication data from the client to the token server, wherein the authentication data comprise data from the data exchange between the client and the data carrier, the data-carrier authentication data, as well as the additional authentication data;
- verifying (8) the authentication data by the token server, whereby proof is furnished that the data carrier has been physically present in the data exchange between the client and the data carrier;
- producing (10) an authentication response in the token server;
- transmitting (11) the authentication response from the token server to the client; and
- transmitting (12) the authentication response from the client to the relying party and verifying (13) the authentication response by the relying party.

2. The method according to claim 1, **characterized in that** upon carrying out the authentication between the client and the relying party a KeyHandle, in particular a UserPrivateKey, a challenge and/or an AppID are transferred.

3. The method according to claim 1 or 2, **characterized in that** for carrying out the method no PIN input vis-à-vis the data carrier is required.

4. The method according to any of the preceding claims, **characterized in that** the server challenge contains a random number.

5. The method according to any of the preceding claims, **characterized in that** a contactless and/ or a contact-type connection between the client and the data carrier is established for carrying out the data exchange between the client and the data carrier.

6. The method according to any of the preceding claims, **characterized in that** upon the verification of the authentication data by the token server, the token server decrypts (10) a client key from the authentication data, in particular from the additional authentication data, wherein the client key is employed in the generation of the authentication response.

7. The method according to any of the preceding claims, **characterized in that** no user data are stored in the token server.

8. The method according to any of the preceding claims, **characterized in that** the token server generates the authentication response with the aid of user data originating exclusively from the client, the data carrier and/or the relying party.

9. The method according to any of the preceding claims, **characterized in that** no PIN verification is necessary for the data exchange between the client and the data carrier.

10. The method according to any of the preceding claims, further comprising the step of verifying whether a two-factor authentication is permitted with the data carrier as the second factor.

11. Employment of a mobile terminal, a tablet PC or a PC as a client in a method for two-factor authentication according to any of the preceding claims, wherein the client is adapted to execute the steps of the client in the method.

12. A token server, adapted for employment in a method for two-factor authentication according to any of the preceding claims 1-10, wherein the token server is adapted to execute the steps of the token server in the method.

13. A system comprising a token server according to claim 12 and adapted to execute a method for two-factor authentication according to any of the preceding claims 1-10.

14. The system according to claim 13, comprising a data carrier in the form of an EMV card that is adapted to make available data-carrier authentication data to a client via a contactless and/or a contact-type connection, said data-carrier authentication data being computed at least in part while employing data from a server challenge.

## Revendications

1. Procédé de réalisation d'une authentification à deux facteurs entre un client et une Partie de confiance, comprenant les étapes suivantes:
- réalisation (1) d'une authentification entre le client et la Partie de confiance;
- transmission (2) de données supplémentaires d'authentification la Partie de confiance au client;
- sollicitation (4), par le client, d'un challenge de serveur de la part d'un serveur à jeton;
- transmission (5) du challenge de serveur du serveur à jeton au client;
- réalisation (6) d'un échange de données entre le client et un support de données, cependant que le client reçoit de la part du support de données des données d'authentification de support de données, cependant que les données d'authentification de support de données sont calculées au moins partiellement en utilisant des données du challenge de serveur,
- transmission (7) de données d'authentification du client au serveur à jeton, cependant que les données d'authentification comprennent des données de l'échange de données entre le client et le support de données, les données d'authentification de support de données ainsi que les données supplémentaires d'authentification;
- vérification (8) des données d'authentification par le serveur à jeton, ce par quoi la preuve que le support de données était physiquement présent lors de l'échange de données entre le client et le support de données est fournie;
- génération (10) d'une réponse d'authentification dans le serveur à jeton;
- transmission (11) de la réponse d'authentification du serveur à jeton au client; et
- transmission (12) de la réponse d'authentification du client à la Partie de confiance, et vérification (13) de la réponse d'authentification par la Partie de confiance.

2. Procédé selon la revendication 1, **caractérisé en ce que**, lors de la réalisation de l'authentification entre le client et la Partie de confiance, un KeyHandle, en particulier une UserPrivateKey, un challenge et/ ou une AppID sont remis.

3. Procédé selon la revendication 1 ou 2, **caractérisé en ce que**, pour la réalisation du procédé, il n'y a pas besoin d'une entrée de PIN vis-à-vis du support de données.

4. Procédé selon une des revendications précédentes, **caractérisé en ce que** le challenge de serveur comporte un chiffre aléatoire.

5. Procédé selon une des revendications précédentes, **caractérisé en ce que**, pour la réalisation de l'échange de données entre le client et le support de données, une connexion sans contact et/ ou avec contact est établie entre le client et le support de données.

6. Procédé selon une des revendications précédentes, **caractérisé en ce que**, lors de la vérification des données d'authentification par le serveur à jeton, le serveur à jeton décrypte (10) une clé client à partir des données d'authentification, en particulier à partir des données supplémentaires d'authentification, cependant que la clé client est utilisée lors de la génération de la réponse d'authentification.

7. Procédé selon une des revendications précédentes, **caractérisé en ce que**, dans le serveur à jeton, aucunes données d'utilisateur ne sont mémorisées.

8. Procédé selon une des revendications précédentes, **caractérisé en ce que** le serveur à jeton génère la réponse d'authentification à l'aide de données d'utilisateur qui proviennent exclusivement du client, du support de données et/ ou de la Partie de confiance.

9. Procédé selon une des revendications précédentes, **caractérisé en ce que**, pour l'échange de données entre le client et le support de données, il n'y a pas besoin de vérification de PIN.

10. Procédé selon une des revendications précédentes, comprenant en outre l'étape de la vérification pour discerner si une authentification à deux facteurs est admissible avec le support de données en tant que le deuxième facteur.

11. Utilisation d'un terminal mobile, d'une tablette PC ou d'un PC en tant que client dans un procédé d'authentification à deux facteurs, cependant que le client est équipé pour exécuter les étapes du client dans le procédé.

12. Serveur à jeton équipé pour l'utilisation dans un procédé d'authentification à deux facteurs selon une des revendications précédentes de 1 à 10, cependant que le serveur à jeton est équipé pour exécuter les étapes du serveur à jeton dans le procédé.

13. Système comprenant un serveur à jeton selon la revendication 12 et équipé pour exécuter un procédé d'authentification à deux facteurs selon une des revendications précédentes de 1 à 10.

14. Système selon la revendication 13, comprenant un support de données sous forme d'une carte EMV équipée pour, par l'intermédiaire d'une connexion sans contact et/ou avec contact, mettre à la disposition d'un client des données d'authentification de support de données qui sont calculées au moins partiellement en utilisant des données d'un challenge de serveur.
